# EUROPEAN PATENT SPECIFICATION

(11) **EP 0 639 603 B1**
(45) Date of publication and mention of the grant of the patent: **30.09.1998**
(21) Application number: 94111336.7
(22) Date of filing: 20.07.1994
(51) Int. Cl.: C08G 65/48, C08L 71/12

(54) **Polyphenylene ether with reactive end groups and thermoplastic composition containing them**
Polyphenylenether enthaltende reaktive Endgruppen und deren thermoplastische Zusammensetzungen
Polyphénylenéther contenant des groupes termin aux reactifs et compositions thermoplastique qui les contiennent

(30) Priority: 21.07.1993 IT MI931609
(43) Date of publication of application: 22.02.1995
(73) Proprietor: ENICHEM S.p.A., 20124 Milano (IT)
(72) Inventor: Bencini, Elena, Cerese di Virgilio (MN) (IT); Ghidoni, Dario, Gonzaga (MN) (IT)
(74) Representative: Weinhold, Peter, Dr.

(56) References cited:
- EP-A- 0 338 209
- EP-A- 0 534 543
- WO-A-86/02086
- FR-A- 2 122 281

## Description

The present invention relates to a polyphenylene ether containing reactive end groups, to the process for its preparation, and to the relevant polymeric compositions.

More in particular, the present invention relates to a polyphenylene ether containing reactive end groups of ether type, to the process for its preparation and to the relevant polymeric compositions.

The polyphenylene ether resins (PPE), also known as polyphenylene oxide resins, represent a well known family of engineering polymers, characterized by excellent and balanced physical-mechanical properties such as hydrolytic stability, dimensional stability, tenacity, thermal resistance and dielectrical properties.

This combination of properties makes the polyphenylene ether resins suitable for use in a variety of applications by means of injection or extrusion molding techniques.

In spite of these numerous possible commercial applications of the polyphenylene ether resins, their utilization is limited due to their poor processability mainly attributable to the low fluidity in the molten state and to the narrow range of workability which can cause some difficulties during the extrusion and injection molding operations.

A further drawback is that the polyphenylene ether resins show a poor solvent resistance after molding and a low resilience (IZOD),so that the use for certain applications is further limited. In fact, it is known that these resins swell or are soluble in acetone, toluene, halogenated hydrocarbons and the like. For this reason they cannot be used for those parts which may come into contact with an organic solvent.

On the other hand, it is known that the polyamides are engineering polymers having good properties of resistance to organic solvents, while they are lacking many other properties. It is known, in fact, that the polyamides such as, for example, Nylon 6 or 66, have a high moisture absorption, a minor water resistance, a minor dimensional stability and a low heat deformation temperature.

For these reasons, polyphenylene ether and polyamide resins are very different from each other and it may be expected that a polymeric alloy obtained by the combination of these two resins have interesting properties since the lacking properties of one of the resins could be compensated by the properties of the other resin.

Japanese Patent Publication No. 997/1970 proposes a polymeric composition consisting of a polyphenylene ether and a polyamide for the purpose of improving the fluidability of the polyphenylene ether. However, owing to the unsatisfactory compatibility of these two resins, the resulting blends exhibit a considerable deterioration of the physical-mechanical properties and very often delamine especially when the amount of the polyamide is relatively high.

Numerous methods for making the polyphenylene ethers compatible with the polyamides have been proposed and developed. Thus, for example, Japanese Patent Publication No. 84-66452 discloses the modification of the polyphenylene ether with an olefinic or acetylenic carboxylic acid or anhydride, such as maleic anhydride, itaconic anhydride, phthalic acid and the like.

A very effective method consists in the formation of a copolymer containing monomeric units reactive with one of the two resins. This may be achieved, for example, by the incorporation of a polyamide-reactive functional group in the chain of the polyphenylene ether.

Functional groups suitable for this purpose include carboxylic acid or anhydride groups, which are, for example, disclosed in Japanese Patent No. 59-66452 and in US-A-4,600,741 and 4,732,938, and epoxy groups.

Various methods of attaching the epoxy groups to polyphenylene ether have been disclosed in various patents and publications. Thus, for example, US-A-4,460,743 discoloses the reaction of a polyphenylene ether with epichlorohydrin; US-A-4,732,937 the reaction with terephthaloyl chloride and glycidol; EP-A-347,539 the reaction with epoxychlorotriazine, etc.

The functionalization of the polyphenylene ether with epoxy groups by the above reported methods requires a large amount of monomers and some of them are toxic. The reactions very often are accompanied by homopolymerization of the epoxy-funzionalized monomers and it is necessary to remove such homopolymers by complex operations. Furthermore, the polyphenylene ethers functionalized with the above-reported groups very often have an unsatisfactory thermal stability and resistance to hydrolysis.

EP-A-534 543 discloses a polyphenylene ether functionalized with imide or anhydride radical containing ether end groups capable of interacting with the polyamide. The blends including such a functionalized polyphenylene ether, however, have a poor fluidity which is not completely satisfactory, especially when these compositions are used for moulding very complicated shaped articles. Moreover, the preparation of such a polyphenylene ether functionalized with ether end groups is rather complex since it requires the preliminary preparation of the alcaline salt of this resin.

The object of the present invention is to provide a polyphenylene ether derivative which does not exhibit the above reported drawbacks and limitations.

More in particular, the object of the present invention is to provide a polyphenylene ether derivative which may easily be prepared is very reactive towards polymides to form compatible and ductile compositions in all desired proportions, and which is endowed with a high thermal stability and resistance to hydrolysis combined with a high melt fluidity so as to assure the moulding of complex shaped articles.

According to the present invention this and other objects are achieved by using a polyphenylene ether containing ether reactive end groups having the following general formula (I): 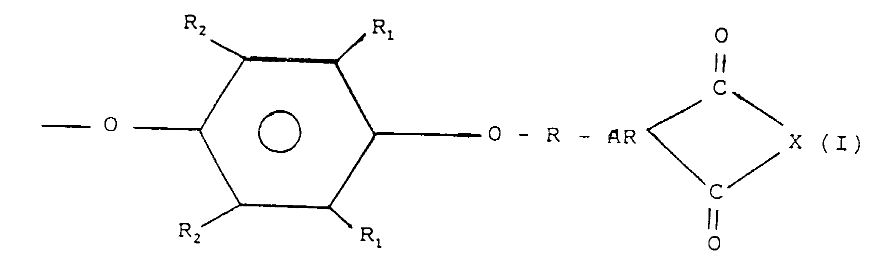 wherein:
R is a linear or branched alkylene radical containing from 1 to 6 carbon atoms;
each R₁ independently is a halogen atom, a primary or secondary alkyl radical containing from 1 to 7 carbon atoms, a substituted alkyl radical, phenyl, substituted phenyl, a C₁ - C₇ alkyloxy radical, or a haloalkyloxy wherein at least two carbon atoms separate the halogen and oxygen atoms;
each R₂ is independently hydrogen, a halogen atom, a primary or secondary alkyl radical containing from 1 to 7 carbon atoms, a substituted alkyl radical, phenyl, substituted phenyl, a C₁ - C₇ alkyloxy radical, or a haloalkyloxy as defined for R ₁;
AR is phenylene or an aromatic radical constituted by 2 or 3 condensed rings; and
X is oxygen or 〉N-R₃ wherein R₃ represents hydrogen, a monovalent organic radical selected from the group consisting of an alkyl group containing from 1 to 10 carbon atoms, preferably from 1 to 4 carbon atoms, a cycloalkyl radical containing from 3 to 8 carbon atoms and an aromatic radical having from 6 to 20 carbon atoms.

Preferred radicals of R are methylene, ethylene, propylene, butylene, 2-methyl-butylene, 3-methyl pentylene and so on.

Preferred radicals included by R₃ are, for example, hydrogen, methyl, ethyl, propyl, butyl and the like, cyclohexyl, phenyl, tolyl, xylyl, naphthyl, 4-ethyl-phenyl and the like.

The polyphenylene ether containing ether end groups of formula (I) can easily be prepared by reacting the polyphenylene ether with a halo-derivative of formula: 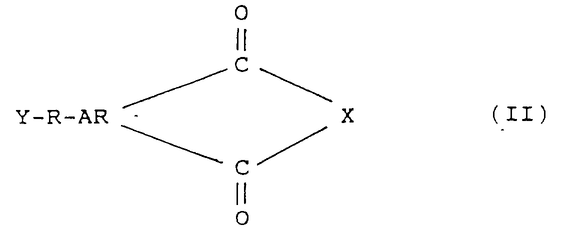 wherein R, AR and X have the above reported meanings and Y is a halogen atom such as chlorine or bromine, in the presence of an aprotic solvent non-miscible with water, and of a phase transfer agent, such as an alkylammonium salt, at a temperature ranging from 20°C to the boiling temperature of the solvent.

The halo-derivatives of formula (II), which can be used in the preparation of the polyphenylene ether containing ether end groups of formula (I) of the present invention, include: 4-bromomethyl-phthaloanhydride, N-methyl-4-bromomethyl-phthalimide and N-ethyl-4-chloromethyl-phthalimide, N-methyl-4-(1-bromoethyl)phthalimide, N-methyl-4-(1-bromomethyl)phthalimide, the corresponding derivatives containing the haloalkyl group in 3 position, 5-bromomethyl-N-methyl-1,8-naphthalimide, 5-chlorometyl-N-methyl-2,3-phthalimide and the like.

These halo-derivatives are known in the literature and can easily be prepared according to the process disclosed, for example, in J. Am. Chem. Soc., 92, 4855 (1970).

Any aprotic organic solventnon-miscible with water may be used in the preparation of the polyphenylene ether containing ether end groups of formula (I). Examples of such solvents include: toluene, benzene, methylene chloride, chloroform and the like. Toluene is preferred since it allows to obtain the best yield in the desired product.

The amount of solvent is not critical, however, solvent/polyphenylene ether weight ratios comprised between 1:1 and 10:1 are generally used.

The molar ratio of the polyphenylene ether to the halo-derivatives of formula (II) may be varied over a fairly wide range; preferably it is comprised between 0.1 and 10, depending upon the required functionality degree.

The reaction time may vary over a fairly wide range and generally it is comprised between 2 and 50 hours,depending upon the reactivity of the halo-derivative and the reaction temperature which, preferably, is comprised between 30 and 60°C.

The polyphenylene ether containing ether end groups of formula (I) can be recovered from the reaction mixture by a variety of procedures.

For example, the reaction mixture may be cooled and the ether end group containing polyphenylene ether may be recovered by filtration.

However, it is preferred to precipitate the polyphenylene ether containing ether end groups by using a precipitating solvent such as, for example, methanol, followed by a conventional recovery technique, such as filtration, or by removal of the solvent under reduced pressure.

The polyphenylene ether is a well-known polymer or copolymer which cpmprises recurring structural units having the formula (III): 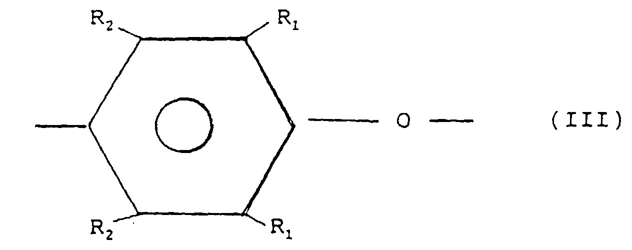 wherein R₁ and R₂ have the above reported meanings.

Examples of R₁ and R₂ include hydrogen, a halogen such as chlorine, bromine or fluorine, an alkyl radical or a substituted alkyl radical such as methyl, ethyl, n- and isopropyl, n-, sec-, iso- and tert- butyl, n-amyl, n-hexyl, 2,3-dimethylbutyl, chloro-ethyl, hydroxyethyl, phenylethyl, hydroxymethyl, carboxy-ethyl, methoxycarbonylethyl, cyanoethyl, aryl or substituted aryl radical such as phenyl, chlorophenyl, methylphenyl, dimethylphenyl, ethylphenyl, a benzyl radical or an allyl radical.

These polymers and the processes for their preparation are broadly described in the literature. As an example, reference is made to US-A-3,226,361; 3,234,183; 3,306,874; 3,306,875; 3,257,357; 3,257,358.

Polyphenylene ethers preferred in the present invention are those having formula (IV): 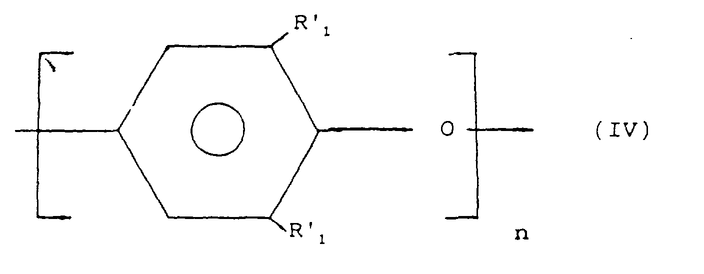 wherein each R₁ independently is an alkyl radical containing from 1 to 4 carbon atoms and n is at least 50 and preferably comprised between 60 and 600.

Illustrative examples of polyphenylene ethers which are particularly suitable for the present invention are:
- poly(2,6-dimethyl-1,4-phenylene)ether;
- poly(2,6-diethyl-1,4-phenylene)ether;
- poly(2-methyl-6-ethyl-1,4-phenylene)ether;
- poly(2,6-dipropyl-1,4-phenylene)ether;
- poly(2-ethyl-6-propyl-1,4-phenylene)ether and the like;
poly(2,6-dimethyl-1,4-phenylene)ether is the most preferred.

The term "polyphenylene ether", whenever used in the present specification and in the claims, includes both the homopolymers and the copolymers containing the structural units of formula (III) indicated hereinbefore, such as, for example, the copolymers comprising units derived from 2,6-dimethylphenol and 2,3,6-trimethylphenol; as well as the grafted copolymers prepared by grafting one or more vinyl or vinyl aromatic monomer(s) such as acrylonitrile, styrene and the like, or polymers such as polystyrene or elastomers onto the polyphenylene ether chain.

The polyphenylene ethers generally have an average molecular weight (determined by gel permeation chromatography) ranging from 5,000 to 120,000, and their inherent viscosity is higher than 0.1 dl/g and preferably ranges from 0.30 to 0.90 dl/g, measured in chloroform at 23°C.

These polyphenylene ethers can be produced by oxidation of a phenol compound with oxygen or an oxygen-containing gas, preferably in the presence of a catalyst for the oxidative coupling. Any known catalyst suitable for the oxidation polymerization can be utilized. Generally they contain at least one compound of a heavy metal such ascopper, manganese or cobalt usually in combination with other types of catalytic compounds.

The polyphenylene ether containing reactive ether end groups of formula (I) of the present invention forms compatible and ductile thermoplastic compositions with all known nucleophilic engineering polymers, such as, for example, polyesters, polyamides and polycarbonates; moreover it can be used as a compatibilizing agent for the polyphenylene ether as such and a nucleophilic engineering polymer of the above reported type.

Therefore, another aspect of the present invention are thermoplastic compositions comprising at least one polyphenylene ether containing ether end groups of formula (I).

Particularly, another object of the present invention are thermoplastic compositions comprising (C₁) a polyphenylene ether, (C₂) a polyphenylene ether containing ether end groups of formula (I), and (C₃) a nucleophilic engineering polymer selected from a polyester, a polyamide and a polycarbonate.

In the compositions, the amount of the polyphenylene ether (C₂) containing ether end groups of formula (I) can vary over a wide range depending on the desired properties. Such an amount is generally comprised between 0.1 and 100 parts by weight with respect to 100 parts by weight of polyphenylene ether (C₁), preferably between 1 and 50 parts by weight.

The composition constituted by polyphenylene ether (C₂) containing ether end groups of formula (I) and polyphenylene ether (C₁) can be obtained directly during the reaction phase between the polyphenylene ether and the halo-derivative of formula (II) by appropriately regulating the ratio between the two reactants and/or the reaction conditions.

The nucleophilic engineering polymer may be used in variable amounts depending on the desired properties of the resulting composition. Generally, the nucleophilic engineering polymer is used in an amount comprised between 5 and 95%, preferably between 10 and 70%, with respect to the total weight of (C₁) + (C₂) + (C₃) .

Polyesters suitable for the preparation of the compositions of the present invention are thermoplastic resins having an inherent viscosity of at least 0.4 dl/g (measured in an 1/1 mixture of phenol/tetrachloroethane), obtained by the polymerization of an aromatic or cycloaliphatic dicarboxylic acid with a diole of formula:

HO - R₄ -OH (V)

wherein R₄ is a straight or branched alkylene radical containing from 2 to 20 carbon atoms or an arylene or cycloalkylene radical containing from 6 to 20 carbon atoms.

Examples of preferred aromatic or cycloaliphatic dicarboxylic acids are terephthalic acid, isophthalic acid and cyclohexane-1,4-dicarboxylic acid, either alone or in admixture with one another. Examples of preferred diols are ethandiol, propandiol, butandiol and hexandiol.

If desired, the polyesters may include small amounts, generally not higher than 15% by weight, of an aliphatic dicarboxylic acid such as adipic acid and the like.

Some examples of preferred saturated polyesters are poly(ethylene-terephthalate), poly(propylene-terephthalate), poly(butylene-terephthalate), and poly(hexamethylene-cyclohexane-1,4-bicarboxylate) and mixtures thereof.

The term polyesteralso includes the elastomeric poly_ esters, polyarylates and the relevant copolymers such as copolyestercarbonates.

Suitable polyamides include those prepared by polymerization of monoamino-monocarboxylic acids or the corresponding lactams having at least two carbon atoms between the amino group and the carboxylic group; or by polymerization of substantially equimolar amounts of a diamine which contains at least two carbon atoms between the aminic groups and a dicarboxylic acid; or further by polymerization of a monoaminomonocarboxylic acid or a lactam thereof, as defined above, along with a substantially equimolar amount of a diamine and of a dicarboxylic acid. The dicarboxylic acid can be utilized in the form of a derivative thereof such as, for example, an ester or an acid chloride.

Typical examples of polyamides or nylons, as they are usually called, are: nylon 6; nylon 6,6; nylon 11; nylon 12; nylon 4,6; nylon 6,10 and nylon 6,12. Nylon 6 and nylon 6,6 are preferred.

Partially aromatic polyamides, block polyamides of the type A - B and A - B - A, in which A is a polyamide block and B is a polyalkylene glycol block, as well as the resilient or super-resilient polyamides obtained by blending the conventional polyamides with an elastomeric polymer or copolymer, can also be utilized in the compositions of the present invention. A class of suitable block polyamides is sold by ATOCHEM under the trade mark PEBAX®.

The average molecular weight of the polyamides is advantageously higher than 10,000, and preferably higher than 15,000 and up to 40,000, and the melting point thereof is preferably higher than 200°C.

The aromatic polycarbonates which can be used in the compositions of the present invention may be homopolymers or copolymers based, for example, on one or more of bisphenols having general formula: 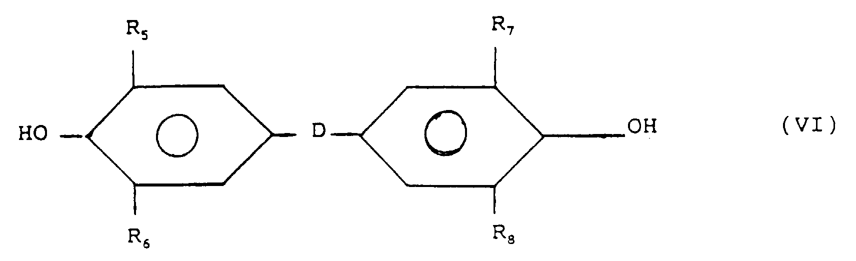 wherein each of R₅, R₆, R₇ and R₈ independently represents hydrogen, an alkyl radical containing from 1 to 4 carbon atoms or one halogen, and D represents -O-, -CO-, -SO₂-, an alkylene radical containing from 2 to 10 carbon atoms, an alkylidene radical containing from 2 to 10 carbon atoms, a cycloalkylene radical containing from 5 to 15 carbon atoms, a cycloalkylidene radical containing from 5 to 15 carbon atoms or the radical:

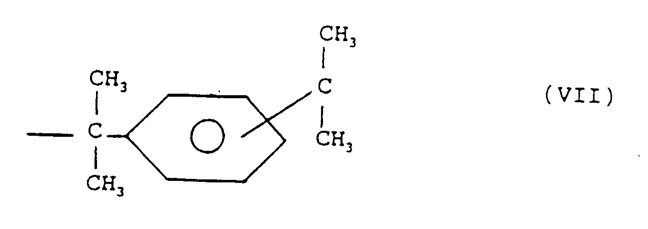

Particularly preferred polycarbonates are those based on 2,2-bis-(4-hydroxyphenyl)propane or on 2,2-bis-(3,5-dimethyl-4-hydroxyphenyl)propane alone or in admixture with each other or with one of the above reported bisphenols.

Polycarbonates containing in the chain units derived from terephthalic and/or isophthalic acid are utilizable as well.

The aromatic polycarbonates, used in the composition of the present invention have an average molecular weight of at least 10,000, more specifically ranging from 10,000 to 200,000 and preferably between 20,000 and 80,000, as determined by measurement of relative viscosity in CH₂Cl₂ at 25°C and with a concentration of 0.5% by weight.

The aromatic polycarbonates containing the recurring units (VI) are well known in the art and are commercially available from different sources, for example: from General Electric Company, Pittsfield Mass., USA under the trade name LEXAN ®; from ANIC S. Donato Milanese (Milano) under the trade name SINVET®,etc.

It is within the scope of the present invention to include into the thermoplastic compositions a rubbery polymeric modifier compatible with the polyphenylene ether and the engineering polymer, in order to further improve the physical properties, particularly the resilience or the impact resistance.

The amount of the rubbery polymeric modifier can be up to 100 and preferably from 5 to 50 parts by weight with respect to 100 parts by weight of the composition (C₁) + (C₂) + (C₃) or (C₂) + (C₃).

These modifiers are well known in the art and typically derive from one or more monomers selected from the group consisting of olefins, vinyl aromatic monomers, acrylic or alkylacrylic acids and their ester derivatives as well as conjugated dienes.

Particularly preferred modifiers are the high-molecular weight rubbery materials including natural and synthetic polymeric materials showing elasticity at room temperature. These modifiers can be homopolymers and copolymers, including random, block, radial block, grafted and core-shell copolymers as well as combinations thereof.

Specific examples of polymeric modifiers include: high density polyethylene, medium density polyethylene and low density polyethylene, linear low density polyethylene, polypropylene, poly(1-butene), propylene-ethylene copolymers, copolymers of ethylene with other copolymerizable monomers such as vinyl acetate, acrylic acid or methacrylic acid as well as the ester derivatives thereof such as ethyl acrylate or methyl-methacrylate; ionomer resins containing side carboxylic groups which can be wholly or partially neutralized with metal ions.

Examples of rubbery polymeric modifiers are vinylaromatic monomer-hydrogenated, partially hydrogenated or non-hydrogenated conjugated diene block polymers, SB and SBS type block polymers, such as polystyrene-polybutadiene, polystyrene-polyisoprene, polystyrene-polybutadiene-polystyrene, polystyrene-polyisoprene-polystyrene, poly(alpha-methylstyrene)-polybutadiene, poly(alpha-methylstyrene)-polyisoprene-poly(alpha-methylstyrene), as well as the polystyrene-poly(ethylene-propylene) rubbery block polymers (SEP) or polystyrene-poly(ethylene-propylene)-polystyrene (SEPS); such rubbery polymers are commercially available, e.g. from Phillips under the tradename SOLPRENE®, from SHELL Company under the tradenames CARIFLEX®, KRATON® D or KPATON® G.

Other types of rubbery modifiers which can be used in the compositions of the present invention are polybutadiene, butadiene-styrene copolymers, poly(chlorobutadiene), ethylene-propylene-diene monomer (EPDM), or the core-shell grafted copolymers having the core constituted by a conjugated diene or a cross-linked acrylic rubber and one or more shells polymerized thereon and derived from a vinyl aromatic monomer and/or acrylic monomer alone or in combination with other vinyl monomers. Such core-shell copolymers are well known and commercially available, e.g. under the tradenames PARALOID ® EXL 3300 and EXL 2607 of Rohm & Haas, and described in US-A-3,808,180; 4,034,013; 3,096,202; 4,180,494, and 4,292,233.

The rubbery polymeric modifier may also be an olefinic elastomer, such as,for example, EPDM, containing a vinyl aromatic polymer, such as polystyrene, grafted thereon.

In addition to components (C₁), (C₂) and (C₃), the compositions of the present invention can contain reinforcing additives such as,for example,glass fibers, carbon fibers, organic and inorganic high-modulus fibers, metal fibers, inorganic fillers, etc., as well as antiflame agents, dyestuffs, pigments, stabilizers, lubricants, etc., which are well-known to those skilled in the art.

The reinforcing additives can be used in amounts generally not exceeding 50% by weight and, preferably, not higher than 30% by weight,calculated on the total composition.

Particularly preferred reinforcing additives are glass fibers, which can be untreated or, preferably, treated with silanes or titanates, as it is well-known to the technicians and to the manufacturers of said fibres.

Suitable stabilizers to be used in the compositions of the present invention comprise many of the known thermal stabilizers and antioxidants generally utilized for the specific engineering polymer,the polyphenylene ether resins, or the polymeric modifiers. For example, liquid phosphates and hindered phenols can be added to the compositions of the present invention, in amounts which can range from 0.05 to 5% by weight.

The method for producing the compositions of the present invention is not critical and any conventional method is utilizable.

Generally, the mixing is carried out in the molten state and time and temperature are selected and determined time-to-time as a function of the composition. The temperatures are generally in the range of from 200 to 300°C.

Any known mixing device can be utilized. The method can be continuous or discontinuous. Specifically, single-screw and two-screw extruders, Banbury type inner mixers, mixing rollers and the like can be used.

Although all the composition components can be introduced at the beginning and directly into the mixing unit, in some cases it is preferable to completely or partially premix one of the components, preferably polyphenylene ether, with the polymeric modifier.

The compositions of the present invention are easily processable by injection molding or by extrusion and exhibit overall properties which make them suited to be utilized for the manufacture of shaped articles having a high impact strength along with a good thermal stability and a low water sensitivity. Thanks to these properties, the compositions of the present invention may be used in the automotive sector, for the manufacture of articles which can be furnace-painted, parts which enter into contact with motors, household electric apparatus, electronic articles and technical articles in general, in the form of cups, boxes, containers, panels, sheets, rods, etc.

In order to better understand the present invention and to reduce it to practice, a few illustrative examples are given hereinafter, which however are not limitative of the scope of the invention.

### EXAMPLES 1 to 5

### Preparation of the polyphenylene ether containing ether end groups of formula (I).

In a 500 cc flask equipped with a mechanical stirrer and a thermometer, 25 grams of poly(2,6-dimethyl-1,4-phenylene)ether having an intrinsic viscosity of 0.51, determined in chloroform at 23°C, and 150 grams of toluene were introduced.

The mixture was heated at 50°C and 5 cc of NaOH at 50% b.w., 0.3 grams of tetrabutylammoniumbromide and 2.1 grams of 4-bromomethyl-N-methylphthalimide were added, by continuing the heating for 3 hours.

The suspension was then poured into about 1.5 liters of methanol.

The polymer separated by filtration was dissolved in 200 cc of chloroform and again precipitated in methanol, after neutralization by HCl and anhydrification on sodium sulfate.

The polymer was then dried in a vacuum oven at 60°C.

24 grams of poly(2,6-dimethyl-1,4-phenylene)ether containing N-methyl-4-methylphthalimide end groups linked by ether link were obtained.

The analysis of the polymer by HNMR spectroscopy shown a peak at about 3.1 ppm relating to the methyl protons at the imidic nitrogen and a peak at about 5.3 ppm relating to the methylenic protons in benzyl position. The polymer shown corresponding signals at about 21.6 ppm and 71 ppm when analyzed by ¹³CNMR spectroscopy.

The functionalization degree quantitatively determined was about 60% by weight.

### Preparation of the composition.

Into a BRABENDER plastograph, equipped with a 50 ml cell and heated at 240°C, there was introduced a mixture, prepared at room temperature, consisting of:
- poly(2,6-dimethyl-1,4-phenylene)ether (PPE) having an intrinsic viscosity of 0.51 (in chloroform at 23°C), dissolved at 105°C in 350 cc. of toluene, in an amount reported in the Table;
- poly(2,6-dimethyl-1,4-phenylene)ether containing ether end groups above prepared, in an amount reported in the Table, and
- a partially hydrogenated diblock copolymer of SEP type containing 37% by weight of styrene and sold by SHELL under the tradename KRATON® G 1701, in an amount reported in the Table.

The BRABENDER mastication speed was programmed according to a cycle: 50 r.p.m. for a time of 1 minute and 100 r.p.m. for a time of 2 minutes.

The mixture leaving this BRABENDER first plastograph was fed to a second plastograph of the same type of the first one together with nylon 6 and poly(2,6-dimethyl-1,4-phenylene)ether in the following proportions:
- 33.3% by weight of the mixture leaving the first plastograph;
- 41% by weight of nylon 6 produced by the firm EniChem S.p.A. under the tradename "TERNIL® B 27", having an weight average molecular weight of 18,000, and
- 25.7% by weight of poly(2,6,-dimethyl-1,4-phenylene) ether of the above reported type.

The operative conditions were the same of the first plastograph.

The resulting mixture was ground, compression molded at 260°C and characterized.

The characteristics of the thus obtained mixture are listed in the following Table.

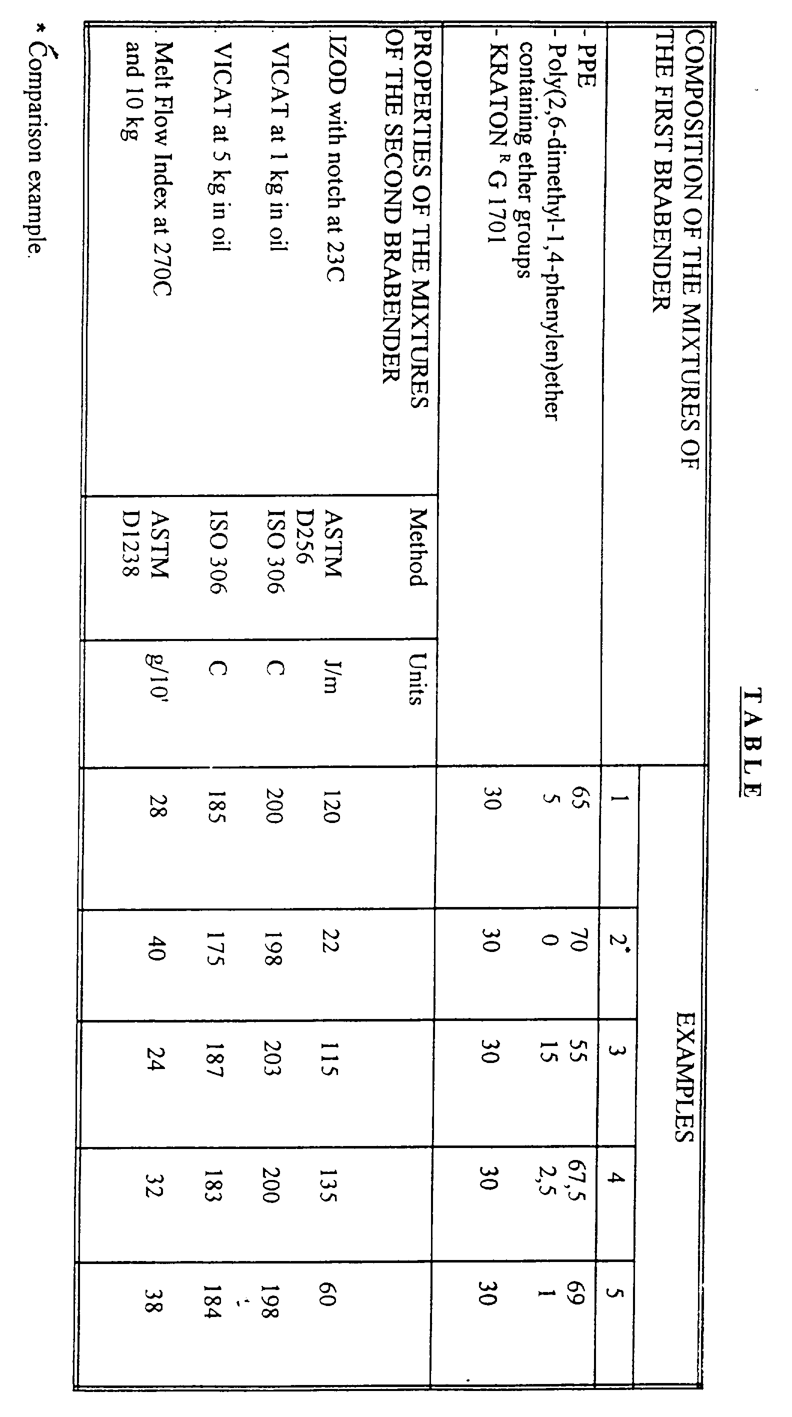

### EXAMPLE 6

The operative conditions of example 1 were repeated by substituting poly(2,6-dimethyl-1,4-phenylene)ether having an intrinsic viscosity of 0.51 by a poly(2,6-dimethyl-1,4-phenylene)ether having an intrinsic viscosity of 0.473.

The characteristics of the thus obtained mixture were:
. IZOD with notch at 23°C : 70 J/m
. VICAT at 1 Kg in oil : 197°C
. VICAT at 5 Kg in oil : 185°C
. Melt Flow Index at 270°C and 10 Kg : 29 g/10'

### EXAMPLE 7 (Comparison example)

The operative conditions of example 1 were repeated by substituting poly(2,6-dimethyl-1,4-phenylene)ether containing ether end groups above prepared by the corresponding one prepared according to example 1 of EP-A-534 543.

The characteristics of the thus obtained mixture were:
. IZOD with notch at 23°C : 170 J/m
. VICAT at 1 Kg in oil : 201°C
. VICAT at 5 Kg in oil : 178°C
. Melt Flow Index at 270°C and 10 Kg : 18 g/10'

## Claims

1. Polyphenylene ether containing ether end groups of formula (I): 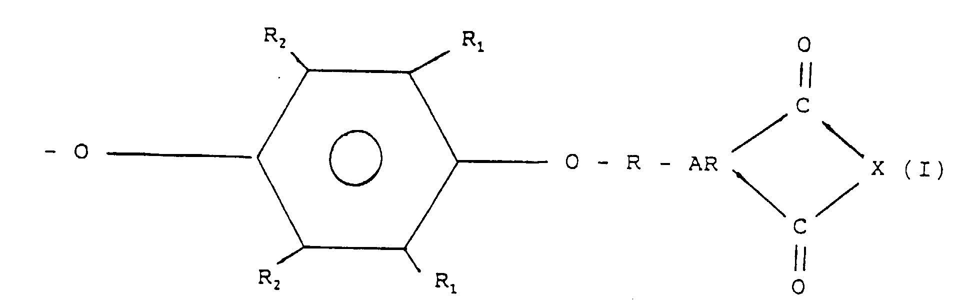 wherein:
R is a linear or branched alkylene radical having from 1 to 6 carbon atoms;
each R₁ independently is a halogen atom, a primary or secondary alkyl radical having from 1 to 7 carbon atoms, a substituted alkyl radical, phenyl, substituted phenyl, a C₁-C₇ alkyloxy radical, or a haloalkyloxy wherein at least two carbon atoms separate the halogen and oxygen atoms;
each R₂ independently is hydrogen, a halogen atom, a primary or secondary alkyl radical having from 1 to 7 carbon atoms, a substituted alkyl radical, phenyl, substituted phenyl, a C₁-C₇ alkyloxy radical, or a haloalkyloxy as defined for R₁;
AR is phenylene or an aromatic radical constituted by 2 or 3 condensed rings; and
X is oxygen or >N-R₃, wherein R₃ represents hydrogen, a monovalent organic radical selected from the group consisting of an alkyl group having from 1 to 10 carbon atoms, preferably from 1 to 4 carbon atoms, a cycloalkyl radical containing from 3 to 8 carbon atoms and an aromatic radical having from 6 to 20 carbon atoms.

2. Polyphenylene ether according to claim 1, wherein the alkylene radical R is selected from methylene, ethylene, propylene, butylene, 2-methyl-butylene, and 3-methyl pentylene.

3. Polyphenylene ether according to any one of claims 1 and 2, wherein "X" is >N-R₃, and R₃ is selected from the group consisting of hydrogen, methyl, ethyl, propyl, butyl, cyclohexyl, phenyl, tolyl, xylyl, naphtyl, and 4-ethylphenyl.

4. A process for the preparation of the polyphenylene ether containing ether end groups of formula (I) according to any one of the preceding claims, consisting in reacting a polyphenylene ether with a halo-derivative of formula (II): 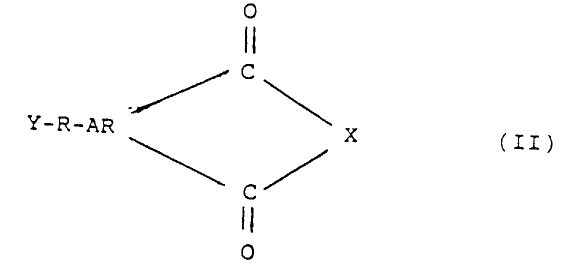 wherein R, AR and X have the meanings given in any one of the preceding claims and Y is a halogen atom such as chlorine or bromine, in the presence of an aprotic solvent non-miscible with water, and of a phase transfer agent, at a temperature ranging from 20°C up to the boiling temperature of the solvent.

5. The process according to claim 4, wherein the halo-derivative of formula (II) is selected from the group consisting of 4-bromomethylphthaloanhydride, N-methyl-4-bromomethylphthalimide, N-ethyl-4-chloromethylphthalimide, N-methyl-4-(1-bromoethyl)phthalimide, N-methyl-4-(1-bromomethyl)phthalimide, the corresponding products containing the haloalkyl group in position 3, 5-bromomethyl-N-methyl-1,8-naphthylimide, and 5-chloromethyl-N-methyl-2,3-naphthylimide.

6. The process according to anyone of claims 4 to 5, wherein the aprotic organic solvent is toluene.

7. The process according to anyone of claims 4 to 6, wherein the molar ratio of the polyphenylene ether to the haloderivates of formula (II) is of from 0.1 to 10, and the weight ratio of solvent/polyphenylene ether is of from 1:1 to 10:1.

8. A thermoplastic composition comprising at least one polyphenylene ether containing ether end groups of formula (I) according to anyone of claims 1 to 3.

9. The thermoplastic composition according to claim 8 comprising:
(C₁). a polyphenylene ether;
(C₂). a polyphenylene ether containing ether end groups of formula (I) according to anyone of claims 1 to 3; and
(C₃). a nucleophilic engineering polymer selected from a polyester, a polyamide and a polycarbonate.

10. The thermoplastic composition according to claim 9, wherein the amount of the polyphenylene ether (C₂) containing ether end groups of formula (I) is 0.1 to 100 parts, preferably 1 to 50 parts by weight, with respect to 100 parts by weight of polyphenylene ether (C₁).

11. The thermoplastic composition according to anyone of claims 9 to 10, wherein the amount of the nucleophilic engineering polymer (C₃) is 5 to 95% by weight, preferably 10 to 70% by weight, with respect to the total weight of the composition.

12. The thermoplastic composition according to anyone of claims 9 to 11, wherein the polyester has an inherent viscosity of at least 0.4 dl/g and is obtainable by polymerization of an aromatic or cycloaliphatic dicarboxylic acid with a diol of formula:
HO - R₄ - OH (V)
wherein R₄ is a straight or branched alkylene radical containing from 2 to 20 carbon atoms or an arylene or cycloalkylene radical containing from 6 to 20 carbon atoms.

13. The thermoplastic composition according to anyone of claims 9 to 11, wherein the polyamide is nylon 6 or nylon 6,6 having a numeral average molecular weight higher than 10,000, preferably higher than 15,000, and up to 40,000.

14. The termoplastic composition according to anyone of claims 9 to 11, wherein the aromatic polycarbonate is based on 2,2-bis-(4-hydroxyphenyl)propane or on 2,2-bis-(3,5-dimethyl-4-hydroxyphenyl)propane and has a numeral average molecular weight of at least 10,000, and preferably of from 20,000 to 80,000.

15. The thermoplastic composition according to anyone of claims 9 to 14, wherein the polyphenylene ether is a polymer or a copolymer containing a plurality of structural units of formula: 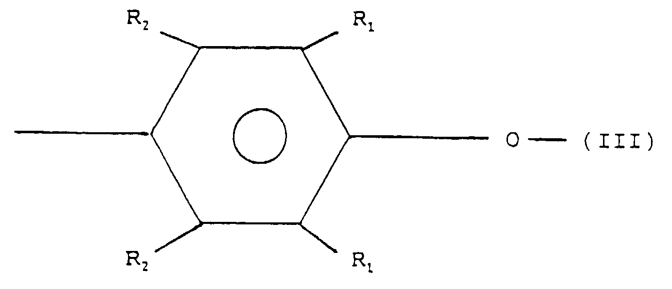 wherein R₁ and R₂ have the meanings reported in claim 1.

16. The termoplastic composition according to claim 15, wherein the polyphenylene ether has the formula: 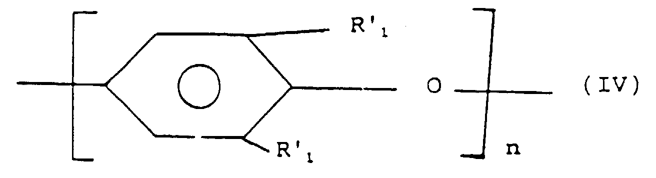 wherein R'₁, independently from each other, are an alkyl radical containing from 1 to 4 carbon atoms and "n" is at least 50 and preferably of from 60 to 600.

17. The thermoplastic composition according to anyone of the preceding claims 15 and 16, wherein the polyphenylene ether has a numeral average molecular weight ranging from 5,000 to 120,000 and an inherent viscosity higher than 0.1 dl/g, and preferably of from 0.30 to 0.90 dl/g, measusred in chloroform at 23°C.

18. The thermoplastic composition according to anyone of the preceding claims 9 to 17, comprising additionally a polymeric modifier in an amount up to 100 parts by weight, preferably of from 5 to 50 parts by weight, with respect to the composition.

19. The thermoplastic composition according to claim 18, wherein the polymeric modifier is selected from the group consisting of polyethylene, polypropylene, propylene-ethylene copolymers, copolymers of ethylene with other copolymerizable monomers, vinylaromatic monomer-hydrogenated, partially hydrogenated or non-hydrogenated conjugated diene rubbery block polymers, polystyrene-poly (ethylene-propylene) rubbery block polymers (SEP), polystyrene-poly(ethylene-propylene)-polstyrene (SEPS), butadiene polymers, EPDM, core-shell grafted copolymers, and olefinic elastomers containing a vinyl aromatic polymer grafted thereon.

20. The thermoplastic composition according to anyone of the claims 9 to 19, additionally containing reinforcing additives, antiflame agents, dyestuffs, pigments, stabilizers, and/or lubricants.

## Patentansprüche

1. Polyphenylenether, welcher Etherendgruppen der Formel (I) enthält: 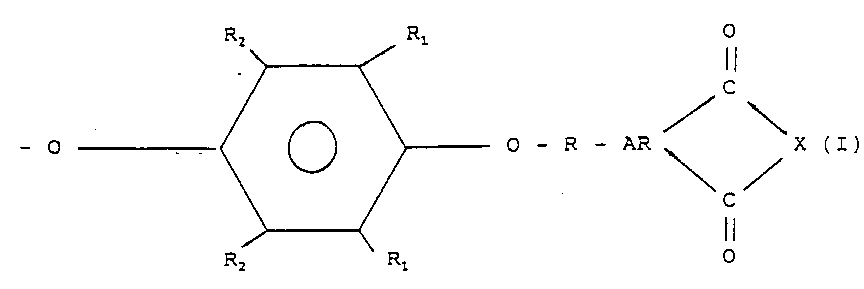 wobei:
R ein linearer oder verzweigter Alkylenrest mit 1 bis 6 Kohlenstoffatomen ist;
jedes R₁ unabhängig ein Halogenatom, ein primärer oder sekundärer Alkylrest mit 1 bis 7 Kohlenstoffatomen, ein substituierter Alkylrest, Phenyl, substituiertes Phenyl, ein C₁-C₇-Alkyloxyrest oder ein Halogenalkyloxy ist, wobei mindestens zwei Kohlenstoffatome die Halogen- und Sauerstoffatome trennen;
jedes R₂ unabhängig Wasserstoff, ein Halogenatom, ein primärer oder sekundärer Alkylrest mit 1 bis 7 Kohlenstoffatomen, ein substituierter Alkylrest, Phenyl, substituiertes Phenyl, ein C₁-C₇-Alkyloxyrest oder ein wie für R₁ definiertes Halogenalkyloxy ist;
AR gleich Phenylen oder ein aromatischer Rest ist, welcher aus 2 oder 3 kondensierten Ringen besteht; und X gleich Sauerstoff oder >N-R₃ ist, wobei R₃ Wasserstoff, einen einwertigen organischen Rest, ausgewählte aus der Gruppe, bestehend aus einer Alkylgruppe mit 1 bis 10 Kohlenstoffatomen, vorzugsweise 1 bis 4 Kohlenstoffatomen, einem Cycloalkylrest, welcher von 3 bis 8 Kohlenstoffatomen enthält, und einem aromatischen Rest mit 6 bis 20 Kohlenstoffatomen, darstellt.

2. Polyphenylenether gemäß Anspruch 1, wobei der Alkylenrest R aus Methylen, Ethylen, Propylen, Butylen, 2-Methylbutylen und 3-Methylpentylen ausgewählt ist.

3. Polyphenylenether gemäß einem der Ansprüche 1 und 2, wobei "X" gleich >N-R₃ ist, und R₃ aus der Gruppe ausgewählt ist, bestehend aus Wasserstoff, Methyl, Ethyl, Propyl, Butyl, Cyclohexyl, Phenyl, Tolyl, Xylyl, Naphthyl und 4-Ethylphenyl.

4. Verfahren zur Herstellung des Polyphenylenethers, welcher Etherendgruppen der Formel (I) enthält, gemäß einem der vorhergehenden Ansprüche, bestehend aus dem Umsetzen eines Polyphenylenethers mit einem Halogenderivat der Formel (II): 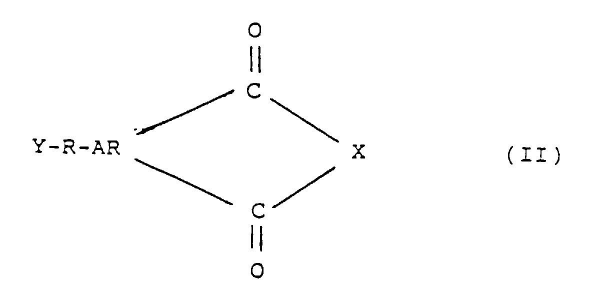 wobei R, AR und X die in einem der vorhergehenden Ansprüche angegebenen Bedeutungen besitzen und Y ein Halogenatom wie Chlor oder Brom ist, in der Gegenwart eines mit Wasser nicht mischbaren aprotischen Lösungsmittels und eines Phasentransferreagens, bei einer Temperatur im Bereich von 20°C bis zur Siedetemperatur des Lösungsmittels.

5. Verfahren gemäß Anspruch 4, wobei das Halogenderivat der Formel (II) aus der Gruppe ausgewählt ist, bestehend aus 4-Brommethylphthaloanhydrid, N-Methyl-4-brommethylphthalimid, N-Ethyl-4-chlormethylphthalimid, N-Methyl-4-(1-bromethyl)phthalimid, N-Methyl-4-(1-brommethyl)phthalimid, den entsprechenden Produkten, die die Halogenalkylgruppe in Position 3 tragen, 5-Brommethyl-N-methyl-1,8-naphthylimid, 5-Chlormethyl-N-methyl-2,3-naphthylimid.

6. Verfahren gemäß einem der Ansprüche 4 bis 5, wobei das aprotische organische Lösungsmittel Toluol ist.

7. Verfahren gemäß einem der Ansprüche 4 bis 6, wobei das Molverhältnis des Polyphenylenethers zu den Halogenderivaten der Formel (II) von 0,1 bis 10 reicht, und das Gewichtsverhältnis von Lösungsmittel/Polyphenylenether von 1:1 bis 10:1 reicht.

8. Thermoplastische Zusammensetzung, umfassend mindestens einen Polyphenylenether, welcher Etherendgruppen der Formel (I) enthält, gemäß einem der Ansprüche 1 bis 3.

9. Thermoplastische Zusammensetzung gemäß Anspruch 8, umfassend:
(C₁). einen Polyphenylenether;
(C₂). einen Polyphenylenether, welcher Etherendgruppen der Formel (I) enthält, gemäß einem der Ansprüche 1 bis 3; und
(C₃). ein nukleophiles technisches Polymer, ausgewählt aus einem Polyester, einem Polyamid und einem Polycarbonat.

10. Thermoplastische Zusammensetzung gemäß Anspruch 9, wobei die Menge des Polyphenylenethers (C₂), welcher Etherendgruppen der Formel (I) enthält, bezogen auf 100 Gewichtsteile an Polyphenylenether (C₁), gleich 0,1 bis 100, vorzugsweise 1 bis 50 Gewichtsteile ist.

11. Thermoplastische Zusammensetzung gemäß einem der Ansprüche 9 bis 10, wobei die Menge an nukleophilem technischem Polymer (C₃) bezogen auf das Gesamtgewicht der Zusammensetzung gleich 5 bis 95 Gew.-%, vorzugsweise 10 bis 70 Gew.-% ist.

12. Thermoplastische Zusammensetzung gemäß einem der Ansprüche 9 bis 11, wobei der Polyester eine logarithmische Viskositätszahl von mindestens 0,4 dl/g besitzt und erhältlich ist durch Polymerisation einer aromatischen oder cycloaliphatischen Dicarbonsäure mit einem Diol der Formel:
HO-R₄-OH (V)
wobei R₄ ein 2 bis 20 Kohlenstoffatome enthaltender linearer oder verzweigter Alkylenrest oder ein 6 bis 20 Kohlenstoffatome enthaltender Arylen- oder Cycloalkylenrest ist.

13. Thermoplastische Zusammensetzung gemäß einem der Ansprüche 9 bis 11, wobei das Polyamid gleich Nylon 6 oder Nylon 6,6 ist, mit einem Zahlenmittel des Molekulargewichts von mehr als 10 000, vorzugsweise mehr als 15 000, und bis zu 40 000.

14. Thermoplastische Zusammensetzung gemäß einem der Ansprüche 9 bis 11, wobei das aromatische Polycarbonat auf 2,2-Bis-(4-hydroxyphenyl)propan oder auf 2,2-Bis(3,5-dimethyl-4-hydroxyphenyl)propan basiert und ein Zahlenmittel des Molekulargewichts von mindestens 10 000, und vorzugsweise von 20 000 bis 80 000 besitzt.

15. Thermoplastische Zusammensetzung gemäß einem der Ansprüche 9 bis 14, wobei der Polyphenylenether ein Polymer oder ein Copolymer ist, welches eine Vielzahl an strukturellen Einheiten der folgenden Formel besitzt: 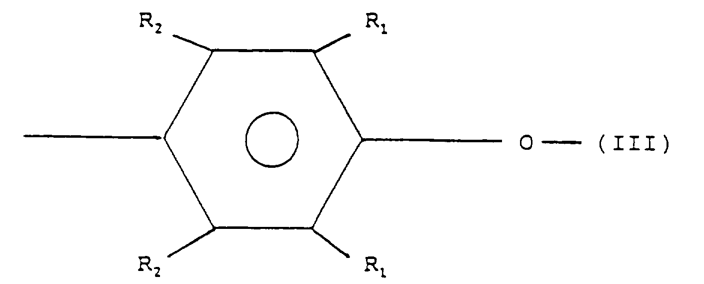 wobei R₁ und R₂ die in Anspruch 1 berichteten Bedeutungen besitzen.

16. Thermoplastische Zusammensetzung gemäß Anspruch 15, wobei der Polyphenylenether die folgende Formel besitzt: 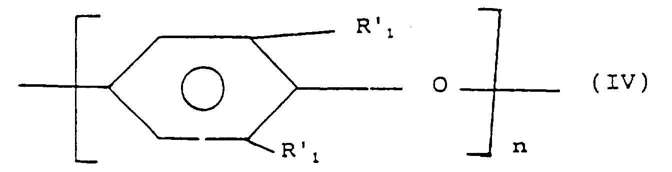 wobei R'₁ unabhängig voneinander ein 1 bis 4 Kohlenstoffatome enthaltender Alkylrest sind und "n" mindestens 50 und vorzugsweise von 60 bis 600 ist.

17. Thermoplastische Zusammensetzung gemäß einem der vorhergehenden Ansprüche 15 und 16, wobei der Polyphenylenether ein Zahlenmittel des Molekulargewichts im Bereich von 5000 bis 120 000 und eine in Chloroform bei 23°C gemessene logarithmische Viskositätszahl von mehr als 0,1 dl/g, und vorzugsweise von 0,30 bis 0,90 dl/g besitzt.

18. Thermoplastische Zusammensetzung gemäß einem der vorhergehenden Ansprüche 9 bis 17, umfassend zusätzlich ein polymeres Modifikationsmittel in einer Menge von bis zu 100 Gewichtsteile, vorzugsweise von 5 bis 50 Gewichtsteile, bezogen auf die Zusammensetzung.

19. Thermoplastische Zusammensetzung gemäß Anspruch 18, wobei das polymere Modifikationsmittel aus der Gruppe ausgewählt ist, bestehend aus Polyethylen, Polypropylen, Propylen-Ethylen-Copolymeren, Copolymeren von Ethylen mit anderen copolymerisierbaren Monomeren, vinylaromatische Monomer-hydrierte, teilweise hydrierte oder nicht hydrierte konjugierte Dien-gummiartige-Blockcopolymere, Polystyrol-Poly(ethylenpropylen)-gummiartige-Blockcopolymere (SEP), Polystyrol-Poly(ethylenpropylen)polystyrol (SEPS), Butadienpolymere, EPDM, Kern-Schale-Pfropfcopolymere und olefinische Elastomere, welche ein vinylaromatisches Polymer darauf gepfropft haben.

20. Thermoplastische Zusammensetzung gemäß einem der Ansprüche 9 bis 19, welche zusätzlich Verstärkungsadditive, flammhemmende Mittel, Farbstoffe, Pigmente, Stabilisatoren und/oder Gleitmittel enthält.

## Revendications

1. Poly(phénylène éther) comportant des groupes terminaux éther de formule (I) : 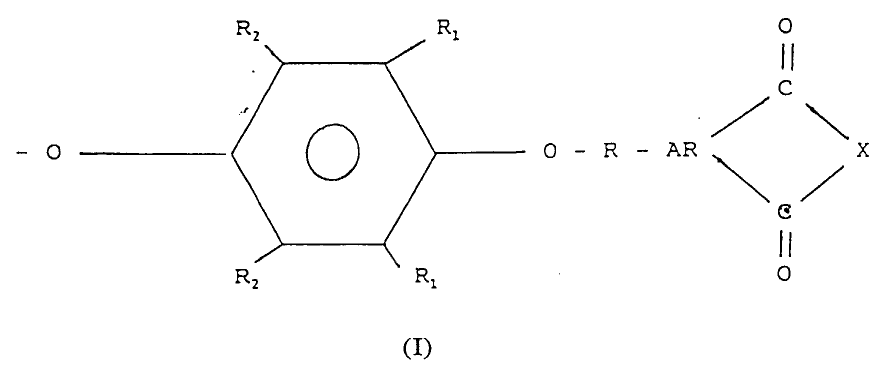 dans laquelle :
R représente un groupe alkylène, linéaire ou ramifié, comportant de 1 à 6 atomes de carbone ;
chaque R₁ représente indépendamment un atome d'halogène, un groupe alkyle, primaire ou secondaire, comportant de 1 à 7 atomes de carbone, un groupe alkyle substitué, phényle, phényle substitué, un groupe alcoxy en C₁-C₇ ou un groupe halogénoalcoxy dans lequel au moins deux atomes de carbone séparent les atomes d'halogène et d'oxygène ;
chaque R₂ représente indépendamment un atome d'hydrogène, un atome d'halogène, un groupe alkyle, primaire ou secondaire, comportant de 1 à 7 atomes de carbone, un groupe alkyle substitué, phényle, phényle substitué, un groupe alcoxy en C₁-C₇ ou un groupe halogénoalcoxy tel que défini pour R₁ ;
AR représente un groupe phénylène ou un groupe aromatique constitué par 2 ou 3 cycles condensés ; et
X représente un atome d'oxygène ou >N-R₃ dans lequel R₃ représente un atome d'hydrogène, un groupe organique monovalent choisi dans l'ensemble constitué par un groupe alkyle comportant de 1 à 10 atomes de carbone, de préférence de 1 à 4 atomes de carbone, un groupe cycloalkyle comportant de 3 à 8 atomes de carbone et un groupe aromatique comportant de 6 à 20 atomes de carbone.

2. Poly(phénylène éther) selon la revendication 1, dans lequel le groupe alkylène R est choisi parmi les groupes méthylène, éthylène, propylène, butylène, 2-méthylbutylène et 3-méthylpentylène.

3. Poly(phénylène éther) selon l'une quelconque des revendications 1 et 2, dans lequel "X" représente >N-R₃ et R₃ est choisi dans l'ensemble constitué par un atome d'hydrogène, les groupes méthyle, éthyle, propyle, butyle, cyclohexyle, phényle, tolyle, xylyle, naphtyle et 4-éthylphényle.

4. Procédé pour préparer un poly(phénylène éther) comportant des groupes terminaux éther de formule (I) selon l'une quelconque des précédentes revendications, consistant à faire réagir un poly(phénylène éther) avec un dérivé halogéné de formule (II) : 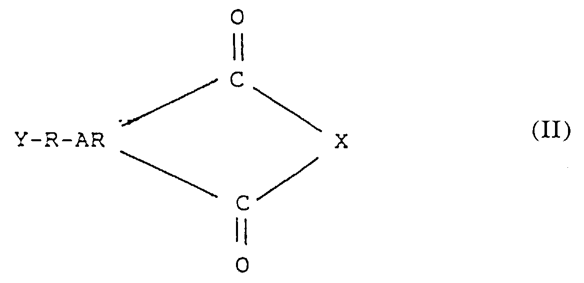 dans laquelle R, AR et X ont les significations données dans l'une quelconque des précédentes revendications et Y représente un atome d'halogène tel que l'atome de chlore ou de brome, en présence d'un solvant-aprotique non-miscible dans l'eau et d'un agent de transfert de phase, à une température se situant dans l'intervalle allant de 20 °C jusqu'à la température d'ébullition du solvant.

5. Procédé selon la revendication 4, dans lequel le dérivé halogéné de formule (II) est choisi dans l'ensemble constitué par le 4-bromométhylphtaloanhydride, le N-méthyl-4-bromométhylphtalimide, le N-éthyl-4-chlorométhylphtalimide, le N-méthyl-4-(1-bromoéthyl)phtalimide, les produits correspondants comportant un groupe halogénoalkyle en position 3, le 5-bromométhyl-N-méthyl-1,8-naphtylimide et le 5-chlorométhyl-N-méthyl-2,3-naphtylimide.

6. Procédé selon l'une quelconque des revendications 4 et 5, dans lequel le solvant organique aprotique est le toluène.

7. Procédé selon l'une quelconque des revendications 4 à 6, dans lequel le rapport molaire du poly(phénylène éther) aux dérivés halogénés lequel le rapport molaire du poly(phénylène éther) aux dérivés halogénés de formule (II) vaut de 0,1 à 10, et le rapport pondéral du solvant au poly(phénylène éther) vaut de 1:1 à 10:1.

8. Composition thermoplastique comprenant au moins un poly(phénylène éther) comportant des groupes terminaux éther de formule (I) selon l'une quelconque des revendications 1 à 3.

9. Composition thermoplastique selon la revendication 8, comprenant :
(C₁) un poly(phénylène éther) ;
(C₂) un poly(phénylène éther) comportant des groupes terminaux éther de formule (I) selon l'une quelconque des revendications 1 à 3 ; et
(C₃) un polymère technique nucléophile choisi parmi un polyester, un polyamide et un polycarbonate.

10. Composition thermoplastique selon la revendication 9, dans laquelle la quantité de poly(phénylène éther) (C₂) comportant des groupes terminaux éther de formule (I) vaut de 0,1 à 100 parties, de préférence de 1 à 50 parties en poids par rapport aux 100 parties en poids de poly(phénylène éther) (C₁).

11. Composition thermoplastique selon l'une quelconque des revendications 9 et 10, dans laquelle la quantité de polymère technique nucléophile (C₃) vaut de 5 à 95 % en poids, de préférence de 10 à 70 % en poids, par rapport au poids total de la composition.

12. Composition thermoplastique selon l'une quelconque des revendications 9 à 11, dans laquelle le polyester présente une viscosité inhérente d'au moins 0,4 dl/g et on peut l'obtenir par polymérisation d'un acide dicarboxylique aromatique ou cycloaliphatique et d'un diol répondant à la formule :
HO-R₄-OH (V)
dans laquelle R₄ représente un groupe alkylène, linéaire ou ramifié, comportant de 2 à 20 atomes de carbone, ou un groupe arylène ou cycloalkylène comportant de 6 à 20 atomes de carbone.

13. Composition thermoplastique selon l'une quelconque des revendications 9 à 11, dans laquelle le polyamide est le nylon 6 ou le nylon 6,6 présentant une masse moléculaire moyenne en nombre supérieure à 10 000, de préférence supérieure à 15 000, et allant jusqu'à 40 000.

14. Composition thermoplastique selon l'une quelconque des revendications 9 à 11, dans laquelle le polycarbonate aromatique est à base de 2,2-bis(4-hydroxyphényl)propane ou de 2,2-bis(3,5-dimethyl-4-hydroxyphényl)propane, et présente une masse moléculaire moyenne en nombre d'au moins 10 000, et de préférence de 20 000 à 80 000.

15. Composition thermoplastique selon l'une quelconque des revendications 9 à 14, dans laquelle le poly(phénylène éther) est un polymère ou un copolymère comportant plusieurs motifs structuraux de formule : 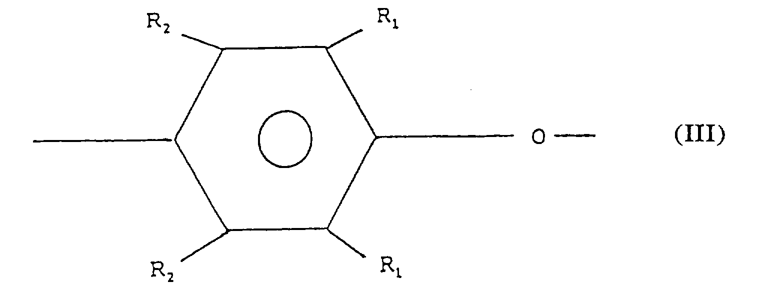 dans laquelle R₁ et R₂ ont les significations telles que données dans la revendication 1.

16. Composition thermoplastique selon la revendication 15, dans laquelle le poly(phénylène éther) répond à la formule : 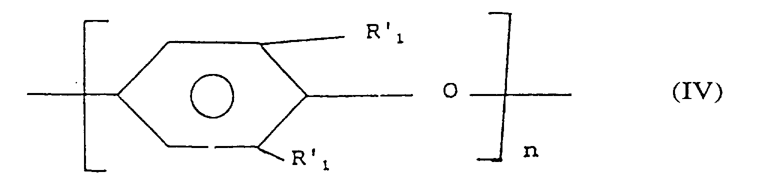 dans laquelle les R'₁, indépendamment les uns des autres, représentent un groupe alkyle comportant de 1 à 4 atomes de carbone et "n" vaut au moins 50, et de préférence de 60 à 600.

17. Composition thermoplastique selon l'une quelconque des précédentes revendications 15 et 16, dans laquelle le poly(phénylène éther) présente une masse moléculaire moyenne en nombre se situant dans l'intervalle allant de 5 000 à 120 000, et une viscosité inhérente supérieure à 0,1 dl/g, et de préférence de 0,30 à 0,90 dl/g, mesurée dans le chloroforme à 23 °C.

18. Composition thermoplastique selon l'une quelconque des précédentes revendications 9 à 17, comprenant en outre un agent de modification polymérique en une quantité allant jusqu'à 100 parties en poids, de préférence de 5 à 50 parties en poids par rapport à la composition.

19. Composition thermoplastique selon la revendication 18, dans laquelle l'agent de modification polymérique est choisi dans l'ensemble constitué par un polyéthylène, un polypropylène, des copolymères propylène/éthylène, des copolymères d'éthylène avec d'autres monomères copolymérisables, des polymères à blocs caoutchouteux de type monomère vinylique aromatique/diène conjugué hydrogéné, partiellement hydrogéné ou non-hydrogéné, des polymères à blocs caoutchouteux de type polystyrène/poly(éthylène/propylène) (SEP), un polystyrène/poly(éthylène/propylène)/polystyrène (SEPS), des polymères de butadiène, l'EPDM, des copolymères greffés de type coeur-enveloppe, et des élastomères oléfiniques contenant un polymère vinylique aromatique greffé dessus.

20. Composition thermoplastique selon l'une quelconque des revendications 9 à 19, contenant en plus des additifs de renforcement, des agents ignifugeants, des matières colorantes, des pigments, des stabilisants et/ou des lubrifiants.
